**Europäisches Patentamt**

**European Patent Office**

**Office européen des brevets**

(19)

(11) Veröffentlichungsnummer : **0 451 219 B1**

(12) **EUROPÄISCHE PATENTSCHRIFT**

(45) Veröffentlichungstag der Patentschrift :
07.09.94 Patentblatt 94/36

(51) Int. Cl.$^5$ : **G01S 11/00**, G01V 1/00

(21) Anmeldenummer : **90908945.0**

(22) Anmeldetag : **07.06.90**

(86) Internationale Anmeldenummer :
**PCT/EP90/00894**

(87) Internationale Veröffentlichungsnummer :
**WO 91/06874 16.05.91 Gazette 91/11**

(54) **VERFAHREN ZUR BESTIMMUNG DER ZIELRICHTUNG UND DER ZIELENTFERNUNG VON SCHALLERZEUGENDEN ZIELEN.**

(30) Priorität : **02.11.89 DE 3936359**

(43) Veröffentlichungstag der Anmeldung :
**16.10.91 Patentblatt 91/42**

(45) Bekanntmachung des Hinweises auf die
Patenterteilung :
**07.09.94 Patentblatt 94/36**

(84) Benannte Vertragsstaaten :
**CH DE FR GB IT LI SE**

(56) Entgegenhaltungen :
**DE-A- 3 705 981**
**GB-A- 2 114 744**
**US-A- 3 995 223**

(73) Patentinhaber : **Rheinmetall GmbH**
**Pempelfurtstrasse 1**
**D-40880 Ratingen (DE)**

(72) Erfinder : **GROSCH, Hermann**
**Birkenweg 10**
**D-5603 Wülfrath (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Bestimmung der Zielrichtung und Zielentfernung von schallerzeugenden Zielen, wie Rad- oder Kettenfahrzeugen, wie es im Oberbegriff des Anspruchs 1 näher charakterisiert ist.

Für die Realisierung von Flächenverteidigungsminen sind Sensoren erforderlich, die potentielle Ziele (Rad- und Kettenfahrzeuge) mit ausreichender Genauigkeit so aufklären, daß die Munition zur Wirkung gebracht werden kann. In Abhängigkeit vom Verbringungssystem (Wurfsystem etc.) und der Munition (z. B. konventionelle Munition, zielsensierende Munition) sind Entfernung und Richtung zum Ziel zu bestimmen. Typische Entfernungsbereiche sind - je nach Munitionskonzept - 40 bis 300 m.

Aus der DE-PS 31 40 728 ist beispielsweise ein Verfahren zur Bestimmung der Zielrichtung und Zielentfernung bekannt, wobei die Zielerfassung mit einem aus vier Mikrofonen bestehenden Luftschallsensor erfolgt. Die Entfernungsbestimmung erfolgt mit Hilfe eines aktiven Zielsensors, bestehend aus einer Schallquelle und dem erwähnten Luftschallsensor. Nachteilig bei dieser Anordnung ist vor allem, daß die Zielerfassungseinrichtung selbst eine Schallquelle enthalten muß. Außerdem sind derartige aktive Sensoren einfach aufzuklären.

Aus der GB-A-2 114 744 ist ein Verfahren zur Bestimmung der Zielrichtung und Zielentfernung von schallerzeugenden Zielen mit Hilfe einer Sensoranordnung bekannt, die ein Mikrofon und einen Seismiksensor aufweist, deren Ausgangssignale jeweils einer Fouriertransformation unterzogen werden. Die dadurch gewonnenen Linienspektren werden verglichen, um die radiale Zielgeschwindigkeit zu ermitteln. Die Zielentfernung wird aus der Zeitverschiebung zwischen den beiden Ausgangssignalen aufgrund der unterschiedlichen Ausbreitungsgeschwindigkeiten im Luft- und Bodenschallkanal bestimmt.

Aus der DE-PS 36 01 053 ist eine Auslöseanordnung für eine starre Richtmine mit einem Laserentfernungsmesser bekannt. Auch in diesem Fall handelt es sich um einen aktiven Sensor, der einfach aufzuklären ist.

Die DE-OS 37 05 981 offenbart eine Vorrichtung für die Zielerkennung und Zündauslösung mit einem Seismiksensor und einem akustischen, aus zwei Richtmikrofonen bestehenden Sensor. Der Seismiksensor dient in diesem Fall zur Aktivierung der Richtmikrofone, stellt also einen sogenannten Wecksensor dar. Mit Hilfe der Richtmikrofone wird dann der Peilwinkel ermittelt. Eine Zielentfernungsmessung erfolgt mit dieser bekannten Vorrichtung nicht.

Schließlich ist auch aus der DE-OS 38 04 495 eine elektronische Zündeinrichtung für Panzerabwehrminen bekannt, die einen Seismiksensor und drei Magnetfeldsensoren enthält. Der Seismiksensor dient auch in diesem Fall wiederum als Wecksensor.

Der vorliegenden Erfindung liegt die Aufgabe zugrunde, das eingangs beschriebene Verfahren so weiterzuentwickeln, daß die Bestimmung der Zielrichtung und der Zielentfernung lediglich mit passiven Sensoren erfolgen kann.

Diese Aufgabe wird erfindungsgemäß durch die Merkmale des kennzeichnenden Teiles des Anspruchs 1 gelöst.

Besonders vorteilhafte Ausgestaltungen des Verfahrens werden in den Unteransprüchen offenbart.

Das erfindungsgemäße Verfahren nutzt also den Effekt, daß Rad- und Kettenfahrzeuge den Luft- und Bodenschallkanal durch das Antriebsaggregat sowie die Kettenabrollgeräusche in gleicher Weise anregen. Der Peilwinkel $\alpha$ zum Ziel wird vorzugsweise über ein Korrelationsverfahren aus dem Luftschallkanal gewonnen. Hierzu sind mindestens drei Mikrofone, vorzugsweise als gleichseitiges Dreieck, anzuordnen.

Zur Zielentfernungsbestimmung werden mittels Fouriertransformation die akustischen und seismischen Signale in den Frequenzbereich transformiert. In beiden Linienspektren werden dann je eine Linie im Luftschall- und Bodenschallspektrum identifiziert, die von der selben Signalquelle des Fahrzeuges herrühren (z. B. Grundlinie des Motors). Mit der Kenntnis des Peilwinkels $\alpha$ und der im Verfahren automatisch bestimmten Ausbreitungsgeschwindigkeit $C_R$ der Rayleighwelle des Bodenschalls kann dann über die Auswertung des Dopplereffektes im Luft- und Bodenschallkanal die radiale Zielgeschwindigkeit $V_{z,r}$ bestimmt werden. Aus der radialen Zielgeschwindigkeit kann dann über den Peilwinkel $\alpha$ die Zielentfernung r berechnet werden.

Das hier offenbarte Verfahren ermittelt Peilung und Entfernung zum Ziel ausschließlich durch Auswertung von Luft- und Bodenschallsignalen, also nur mit passiven Sensoren.

Weitere Vorteile und Einzelheiten der Erfindung werden im folgenden anhand eines Ausführungsbeispieles und mit Hilfe von Figuren beschrieben.

Es zeigen:

Fig. 1    einen sich relativ zur Sensoranordnung bewegenden Panzer; und

Fig. 2    das Blockschaltbild einer Sensoranordnung mit elektronischer Auswertevorrichtung.

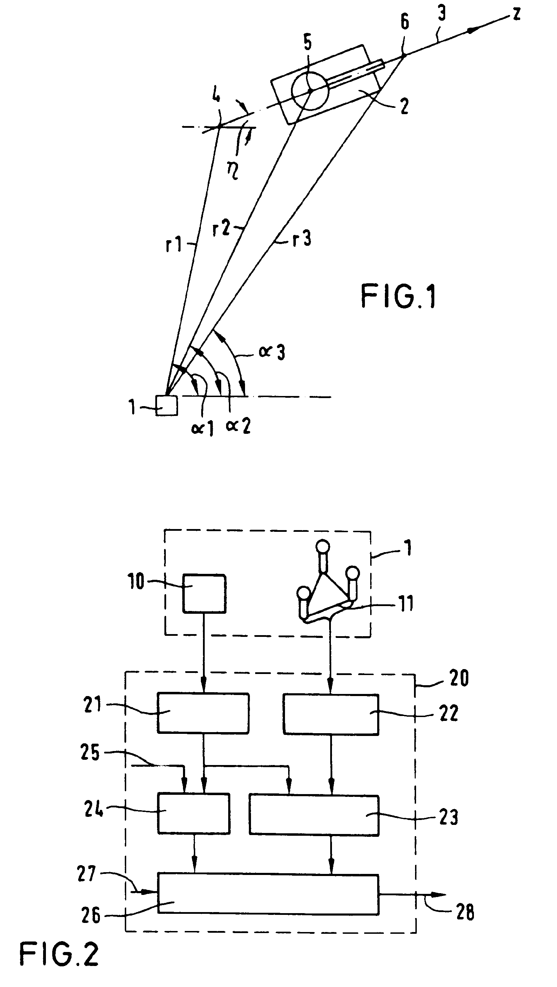

In Fig. 1 ist mit 1 eine Sensoranordnung und mit 2 ein sich auf der Geraden 3 bewegender Panzer, dessen Entfernung ermittelt werden soll, dargestellt. Das Ziel 2 bewegt sich nacheinander von dem Ort 4 über den Ort 5 zum Ort 6. Die entsprechenden Peilwinkel sind mit $\alpha$ 1, $\alpha$ 2 und or $\alpha$ 3 gekennzeichnet, während die Richtung der Zielbewegung mit $\eta$ bezeichnet ist. Die entsprechenden Zielentfernungen der Sensoranordnung 1 von den Zielpunkten 4, 5 und 6 sind mit r1, r2 und r3 gekennzeichnet.

In Fig. 2 ist noch einmal die Sensoranordnung 1 sowie eine der Sensoranordnung zugeordnete Auswerteelektronik 20 dargestellt, die die entsprechenden Zündsignale erzeugt.

Die Sensoranordnung 1 enthält einen Seismiksensor 10 (Geophon) sowie einen Luftschallsensor 11, der im wesentlichen aus drei Mikrofonen, die vorzugsweise in der Anordnung eines gleichseitigen Dreiecks angeordnet sind, besteht.

In der Auswerteelektronik 20 erfolgt mit Hilfe der Funktionseinheiten 21 und 22 eine Fouriertransformation der entsprechenden, von der Sensoranordnung kommenden Signale. Anschließend erfolgt in der Funktionseinheit 23 eine Linienidentifizierung, damit sichergestellt wird, daß lediglich Frequenzen < 100 Hz auf ihre Dopplerverschiebung hin analysiert werden, wobei es sich um Linien handeln muß, die charakteristisch für Signalquellen des Zieles sind. Insbesondere kommt als Signalquelle des Ziels die Grundlinie des Motors oder das Kettengeräusch in Betracht. Dieses bedeutet, daß die Linienidentifizierung der zueinandergehörenden Linien im Luft- und Bodenschallkanal auf einfache Weise durchgeführt werden kann.

Wesentliche Vorteile ergeben sich dadurch, daß im Boden- und Luftschallkanal zwei zugehörige Linien näherungsweise gleicher Frequenz identifiziert werden können, weil dann gilt:

$$\frac{f_D \text{ (Luft)}}{f_D \text{ (Boden)}} \approx 1$$

Die Linienidentifizierung wird mit der Funktionseinheit 23 derart durchgeführt, daß im Spektrum des Bodenschallsignals eine Linie gesucht wird, die zur Linie mit der höchsten spektralen Leistung im Luftschallkanal eine Frequenzlage aufweist, die gegenüber der Linie im Luftschallkanal um einen Wert von < $|$ 10...15 Hz $|$ verschoben ist. Kann eine solche Linie nicht identifiziert werden, wird das Verfahren mit der Linie der nächsthöchsten spektralen Leistung wiederholt.

Mit Hilfe der Funktionseinheit 24 erfolgt die Ermittlung der Ausbreitungsgeschwindigkeit $C_R$ der von dem Geophon 10 gemessenen Rayleighwelle, wobei über die Leitung 25 der entsprechende Peilwinkelwert $\alpha$ eingegeben wird. Die Bestimmung von $C_R$ wird weiter unten näher erklärt.In der Funktionseinheit 26 wird dann aus den Dopplerfrequenzverschiebungen der Ausbreitungsgeschwindigkeit der Rayleighwelle, der Schallgeschwindigkeit und dem Peilwinkel die Zielentfernung berechnet. Aus der Zielentfernung und dem Peilwinkel werden dann entsprechende Kriterien für den Zündzeitpunkt gewonnen, so daß über die Leitung 28 entsprechende Zündsignale an den nicht dargestellten Waffenträger weitergegeben werden können.

Selbstverständlich muß es sich bei den vorstehend erwähnten Funktionseinheiten 21, 22, 23 und 24 nicht um hardwaremäßige Baueinheiten handeln. Vielmehr können diese Einheiten auch durch einen entsprechend programmierten Rechner realisiert werden.

Im folgenden wird etwas näher auf die Berechnung der Zielentfernung aufgrund der gemessenen Dopplerfrequenzverschiebungen und der Peilwinkel $\alpha$ eingegangen:

Bewegt sich das Ziel 2 (Fig. 1) relativ zu der Sensoranordnung 1 mit der Geschwindigkeit $V_{z,r}$ (Bewegung des Ziels 2 im Abstand r in Richtung z), so verschieben sich die zielcharakteristischen Linien durch den Dopplereffekt wie folgt:

für die Rayleighwelle:

$$f_{D,R} = f_R \left( 1 + \frac{V_{z,r}}{C_R (f_R) - V_{z,r}} \right) \quad (1)$$

$f_{D,R}$      Dopplerfrequenz
$f_R$      Frequenz ohne Dopplerverschiebung
$C_R$      Ausbreitungsgeschwindigkeit der Rayleighwelle.

für die Schallwelle:

$$f_{D,S} = f_S \left( 1 + \frac{V_{z,r}}{C_S (f_S) - V_{z,r}} \right) \quad (2)$$

mit

$f_{D,S} =$      Dopplerfrequenz
$f_S =$      Frequenz der Schallwelle ohne Dopplerverschiebung
$C_S =$      Schallgeschwindigkeit.

Aus (1) und (2) ergibt sich
für die Geschwindigkeit:

$$V_{z,r} = \frac{CS(fS)\left(\frac{fDS}{fDR} - 1\right)}{\frac{fDS}{fDR} - \frac{CS(fS)}{CR(fR)}} \quad (3)$$

Für die Berechnung der Geschwindigkeit $V_{z,r}$ ist ferner die Ermittlung der Ausbreitungsgeschwindigkeit $C_R$ der Rayleighwelle bei der entsprechenden Frequenz erforderlich. Die Bestimmung der Ausbreitungsgeschwindigkeit $C_R$ einer Rayleighwelle ist im Prinzip nur unter Auswertung der vom Fahrzeug abgestrahlten, genügend breitbandigen Signale möglich. Wird zwischen den in den Frequenzbereich transformierten Signalen von zwei Sensoren das Kreuzspektrum gebildet, so kann über den Phasenwinkel $\ominus$ des Kreuzspektrums:

$$\ominus (k.F_G) = \text{arctg} \frac{Im[S_1 {}^* (k.F_G).S_2(k.F_G)]}{Re[S_1 {}^* (k.F_G).S_2(k.F_G)]}$$

die Ausbreitungsgeschwindigkeit bestimmt werden:

$$C_R(k.F_G) = \frac{d.k.F_G.2\pi}{\ominus (k.F_G)} . \cos\alpha$$

Dabei bedeuten:

$k =$ Laufvariable
$F_G =$ Frequenzauflösung eines diskreten Frequenzspektrums
$S_1{}^* =$ konjugiert komplexes Spektrum eines diskreten Signals S
$S_2 =$ diskretes Signal im Frequenzraum
$d =$ Abstand von 2 Geophonen

Mit Hilfe von $C_R$, $\alpha$ und $V_{z,r}$ wird die Zielentfernung r wie folgt berechnet:

$r_1(O)e^{j\alpha 1} + |V_z| . T_i . e^{j\eta} = r_2(T_i) . e^{j\alpha 2}$,
$r_2(T_i)e^{j\alpha 2} + |V_z| . T_i . e^{j\eta} = r_3(2T_i)e^{j\alpha 3}$,
$V_{z,r}(r_2) = |V_z| . \cos(\alpha_2 - \eta)$,
$V_z(r_3) = |V_z| . \cos(\alpha_3 - \eta)$,
$(V_z.T_i)^2 = r_1{}^2(O) + r_2{}^2(T_i) - 2_{r1}(O) . r_2(T_i) . \cos(\alpha_1 - \alpha_2)$.

Hierin bedeutet $T_i$ die Zeit, die das Fahrzeug für die Fahrstrecke von 4 nach 5 bzw. 5 nach 6 (Fig. 1) benötigt.

Bezugszeichenliste

1 Sensoranordnung
2 Ziel, Panzer
3 Gerade
4 Orte des Zieles auf der Geraden 3
5 zu verschiedenen Zeiten
10 Seismiksensor, Geophon
11 Luftschallsensor
20 Auswerteelektronik, Rechner
21 Funktionseinheit zur Durchführung von Fouriertransformation
22 Funktionseinheit zur Durchführung von Fouriertransformation
23 Funktionseinheit zur Linienidentifizierung
24 Funktionseinheit zur Ermittlung der Ausbreitungsgeschwindigkeit der Rayleighwelle
25 Leitung, über die der Peilwinkel eingegeben wird
26 Einheit zur Berechnung von $V_{z,r}$ und des Zündzeitpunktes
27 Leitung, über die der Peilwinkel eingegeben wird.
28 Leitung, über die Zündsignale an den Waffenträger geleitet werden

**Patentansprüche**

1. Verfahren zur Bestimmung der Zielrichtung und Zielentfernung von schallerzeugenden Zielen (2), wie Rad- oder Kettenfahrzeugen, mit Hilfe einer aus mehreren Sensoren (10, 11) bestehenden Sensoranordnung (1), wobei zur Zielrichtungsbestimmung akustische Sensoren (11) verwendet werden, um den Peilwinkel ($\alpha$) zum Ziel zu ermitteln, **dadurch gekennzeichnet**, daß zur Zielentfernungsmessung zusätzlich zu den akustischen Sensoren (11) ein Seismiksensor (10) verwendet wird, daß für eine für das Ziel (2) charakteristische Signalquelle jeweils eine im Luftschall- als auch im Bodenschallspektrum charakteristische Linie gemessen wird, und daß aus der Dopplerverschiebung dieser Linien und der Ausbreitungsgeschwindigkeit (C) der entsprechenden Wellen die radiale Zielgeschwindigkeit ($V_{z,r}$) und hieraus - unter Berücksichtigung des Peilwinkels ($\alpha$) - die Zielentfernung (r) berechnet wird.

2. Verfahren nach Anspruch 1, **dadurch gekennzeichnet**, daß zur Messung der Dopplerverschiebung nur Linien im Bodenschallspektrum < 100 Hz herangezogen werden.

3. Verfahren nach Anspruch 1 oder 2, **dadurch gekennzeichnet**, daß zur Messung der Dopplerverschiebung im Bodenschall- und Luftschallspektrum nur Linien etwa gleicher Frequenz herangezogen werden, so daß gilt $f_D$ (Luft)/$f_D$ (Boden) $\approx$ 1, wobei $f_D$ (Luft), die Frequenz der zielcharakteristischen Linie im Luftspektrum und $f_D$ (Boden) die Frequenz der zielcharakteristischen Linie im Bodenspektrum bedeutet.

## Claims

1. Method for determining direction and range of noise-generating targets (2), such as wheeled or tracked vehicles using a sensor system (1) comprising a number of sensors (10,11) wherein for determining the direction use is made of acoustic sensors (11) which determine the angular bearing ($\alpha$) of the target, characterised by the fact that for measuring the distance of the target use is made, in addition to the acoustic sensors (11), of a seismic sensor (10) and that for a signal source characteristic of the target (2) a characteristic line is measured of the airborne-transmitted spectrum and also of the groundborne-transmitted spectrum, and that from the Doppler shift of these lines and the propagation speed (C) of the corresponding radiation waves the radial target speed ($V_{z,r}$) is calculated, from which, taking the bearing angle ($\alpha$) into account, the range (r) is likewise calculated.

2. Method in accordance with Claim 1, characterised by the fact that for measuring the Doppler shift only spectral lines in the groundborne-transmitted spectrum of less than 100 Hz are utilised.

3. Method in accordance with Claim 1 or 2, characterised by the fact that for measuring the Doppler shift in the groundborne-transmitted spectrum and in the airborne transmitted spectrum only lines of approximately the same frequency are used, so that the equation $f_D$ (air) / $f_D$ (ground) $\approx$ 1 applies, wherein $F_D$ (air) denotes the frequency of the target characteristic line in the airborne-transmitted spectrum and $F_D$ (ground) denotes the frequency of the target characteristic line in the groundborne-transmitted spectrum.

## Revendications

1. Procédé de détermination de la direction et de la distance de cibles (2) génératrices de sons, telles que des véhicules à roue ou chenillés, à l'aide d'un dispositif capteur (1) composé de plusieurs capteurs (10, 11), des capteurs acoustiques (11) étant utilisés pour déterminer la direction de la cible, en vue de déterminer l'angle de gisement ($\alpha$) de la cible, caractérisé en ce qu'est utilisé, en plus des capteurs (11) acoustiques, pour la mesure de distance de la cible, un capteur sismique (10), en ce que pour une source de signaux caractéristiques de la cible (2) est chaque fois mesurée une ligne caractéristique, tant dans le spectre des bruits aériens qu'également des bruits de sol, et en ce que la vitesse radiale de cible ($V_z$, r) et, à partir d'elle, la distance (r) de la cible - en prenant en compte l'angle de gisement ($\alpha$), est calculée, à partir du décalage Doppler de ces lignes et de la vitesse de propagation (C) des ondes correspondantes.

2. Procédé selon la revendication 1, caractérisé en ce que l'on utilise seulement les lignes situées dans le spectre de bruit de sol et < 100 Hz pour la mesure du décalage Doppler.

3. Procédé selon la revendication 1 ou 2, caractérisé en ce que, pour la mesure du décalage Doppler dans les spectres des bruits de sol et des bruits aériens, on n'utilise que des lignes ayant à peu près la même fréquence, de sorte que l'on a $f_D$ (air)/$f_D$ (sol) $\approx$ 1, où $f_D$ (air) est la fréquence de la ligne caractéristique de la cible dans le spectre aérien et $f_D$ (sol) est la fréquence de la ligne caractéristique de la cible dans le spectre de sol.

FIG.1

FIG.2

6